# EUROPÄISCHE PATENTSCHRIFT

(11) **EP 2 787 264 B1**
(45) Veröffentlichungstag und Bekanntmachung des Hinweises auf die Patenterteilung: **08.02.2017**
(21) Anmeldenummer: 14172082.1
(22) Anmeldetag: 03.03.2010
(51) Int. Cl.: F16L 23/14, E04F 17/04, F24F 13/02, F24F 13/08, F16B 5/06, F16B 17/00, F16B 19/00

(54) **Halteelement zum Halten eines Luftleitbleches in einem Luftkanal**
Holding element for holding a baffle plate in an air duct
Élément de retenue pour retenir un déflecteur d'air dans un conduit d'air

(30) Priorität: 05.03.2009 DE 102009011380
(43) Veröffentlichungstag der Anmeldung: 08.10.2014
(62) Teilanmeldung aus: 10710538.9
(73) Patentinhaber: Hermanussen Metallverarbeitung GmbH, 59457 Werl (DE)
(72) Erfinder: Dravenau, Paul, 10119 Berlin (DE); Tenner, Martin, 59457 Werl (DE); Lehmann, Jörg, 59457 Werl (DE)
(74) Vertreter: Isfort, Olaf

(56) Entgegenhaltungen:
- EP-A1- 0 225 438
- EP-A1- 0 594 261
- DE-A1- 4 117 169
- DE-A1- 10 353 568
- US-A- 4 297 049

## Beschreibung

Die Erfindung betrifft ein Halteelement zum Halten eines Luftleitbleches in einem Luftkanal, aufweisend einen Kopf sowie einen daran angeordneten, in den Luftkanal einfügbaren Halteabschnitt, wobei der Halteabschnitt zwei parallel zueinander ausgerichtete Klemmelemente aufweist, welche jeweils aus zwei Klemmgliedern gebildet sind, zwischen denen der Rand eines Luftleitbleches einklemmbar ist, und wobei an der dem Halteabschnitt zugewandten Seite des Kopfes ein ringförmiges Dichtelement angeordnet ist, das eine Aussparung im Verbindungsbereich zwischen dem Halteabschnitt und dem Kopf aufweist.

Die gattungsbildende DE 41 17 169 A1 beschreibt beispielsweise ein Befestigungsglied mit einem Kopf und mit einem zweischenkligen Schaft, wobei zwischen den Schenkeln eine Mittelplatte schwimmend angeordnet ist, die durch eine elastische Dichtungsplatte gesichert ist.

Es hat sich in der Praxis gezeigt, dass derartig ausgebildete Halteelemente keine ausreichende Abdichtung eines Luftkanals gegen dessen Umgebung bewirken. Es ist feststellbar, dass über sie Luft aus dem Luftkanal austritt, was insbesondere bei einem unter Hochdruck stehenden Luftkanal sehr nachteilig ist und nicht den heutigen hohen Anforderungen an solche Luftkanäle entspricht. Mit den bekannten Halteelementen ist es nicht möglich, die Kriterien der Dichtheitsklassen C und D zu erfüllen.

Daher wird mit der Erfindung ein entsprechendes Halteelement vorgeschlagen, bei dem in dem Bereich zwischen den Klemmelementen ein zusätzliches Dichtelement angeordnet ist.

Durch das erfindungsgemäße Halteelement wird verhindert, dass Luft aus dem Luftkanal über das Halteelement austritt. Ein solcher Luftkanal erfüllt somit die Kriterien der Dichtheitsklassen C und D.

Erfindungsgemäß ist das zusätzliche Dichtelement einstückig mit dem ringförmigen Dichtelement ausgebildet. Die Anordnung dieses einstückig ausgebildeten Dichtelementes kann wie bei den üblichen, mit den beschriebenen Nachteilen behafteten Dichtelementen erfolgen. Es sind keine zusätzlichen und aufwändigen Arbeitsschritte erforderlich.

Ferner wird mit der Erfindung ein Luftkanal mit mehreren über Flanschprofile miteinander verbundenen Luftkanalabschnitten vorgeschlagen, wobei der Luftkanal abgewinkelte Luftkanalabschnitte umfasst, in denen ein Luftleitblech angeordnet ist, das über Halteelemente in der gewünschten Position relativ zu dem abgewinkelten Luftkanalabschnitt gehalten wird.

Erfindungsgemäß sind Halteelemente gemäß den vorbeschriebenen Ausgestaltungen ausgebildet, um so einen Luftkanal bereitstellen zu können, welcher der höchsten Dichtheitsklasse entspricht.

Weitere Vorteile und Merkmale der vorliegenden Erfindung werden im Folgenden anhand der in den Figuren gezeigten Ausführungsbeispiele näher erläutert. Dabei zeigen:
- Figur 1:: schematische Darstellung eines Ausführungsbeispiels eines Luftkanalabschnitts des erfindungsgemäßen Luftkanals mit Luftleitblech,
- Figuren 2A-2C:: verschiedene Perspektiven eines Ausführungsbeispiels des erfindungsgemäßen Halteelementes.

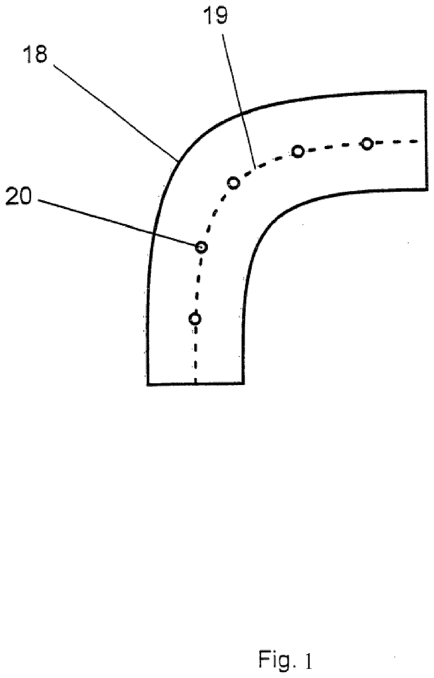

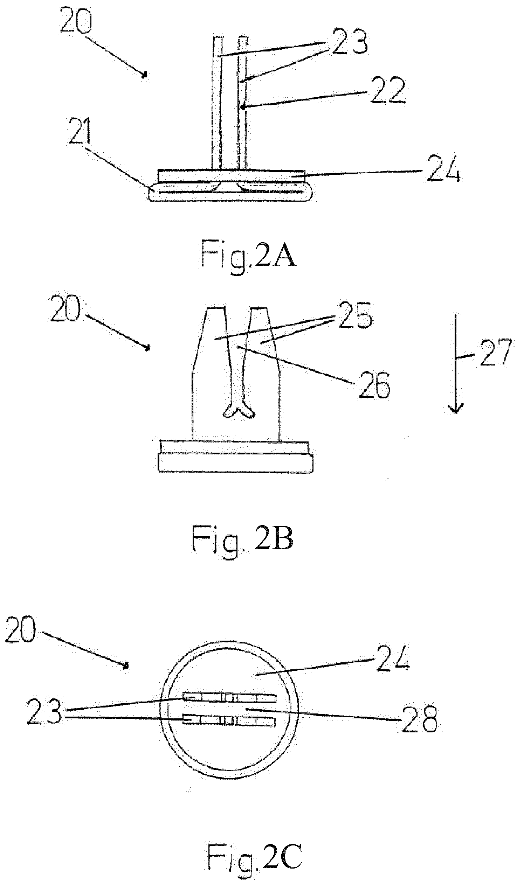

Figur 1 zeigt schematisch ein Ausführungsbeispiel für einen abgewinkelten Luftkanalabschnitt 18 des nicht näher dargestellten erfindungsgemäßen Luftkanals. In dem Luftkanalabschnitt 18 ist ein Luftleitblech 19 angeordnet, welches zur besseren Führung eines durch den Luftkanal beziehungsweise den Luftkanalabschnitt 18 strömenden Luftstromes dient. Das Luftleitblech 19 wird mittels der Halteelemente 20 in seiner Position relativ zum Luftkanalabschnitt 18 gehalten. Der in den Figuren 2A, 2B und 2C dargestellte Halteabschnitt jedes Halteelementes 20 ist hierbei in eine Bohrung in der Wandung des Luftkanalabschnittes 18 eingefügt.

Figur 2A zeigt eine Seitenansicht eines Ausführungsbeispiels des erfindungsgemäßen Halteelementes 20. Das Halteelement 20 weist einen Kopf 21 und einen daran angeordneten Halteabschnitt 22 auf. Der Halteabschnitt 22 besteht aus zwei parallel zueinander ausgerichteten Klemmelementen 23. An dem Kopf 21 ist ein ringförmig ausgebildetes Dichtelement 24 angeordnet, welches bei bestimmungsgemäßer Anordnung des Halteelementes 20 an einem Luftkanal an der Außenseite der Luftkanalwandung anliegt. Das Halteelement 20 besteht, abgesehen von dem Dichtelement 24 aus elastischem Material, aus einem einstückig ausgebildeten, gefalzten Blech.

Figur 2B zeigt das in Figur 2A dargestellte Halteelement 20 in einer um eine vertikale Achse um 90° gedrehten Stellung. Es sind die beiden Klemmglieder 25 eines der beiden Klemmelemente 23 zu sehen, zwischen denen ein sich zum Kopf 21 hin verjüngender Klemmspalt 26 angeordnet ist, in den die Wandung eines Luftkanalabschnitts eingefügt werden kann.

Figur 2C zeigt schließlich eine Ansicht des in Figur 2B gezeigten Halteelementes 20 gemäß dem in Figur 2B dargestellten Pfeil 27. Hier ist ein zusätzliches Dichtelement 28 zu erkennen, welches zwischen den beiden Klemmelementen 23 angeordnet ist. Dieses zusätzliche Dichtelement 28 ist erfindungsgemäß einstückig mit dem ringförmigen Dichtelement 24 ausgebildet. Das zusätzliche Dichtelement 28 und das ringförmige Dichtelement 24 bilden somit gemeinsam ein einheitliches, durchgehendes Dichtelement mit schlitzförmigen Aussparungen, durch die sich die Klemmelemente 23 erstrecken.

## Patentansprüche

1. Halteelement (20) zum Halten eines Luftleitbleches (19) in einem Luftkanal, aufweisend einen Kopf (21) sowie einen daran angeordneten, in den Luftkanal einfügbaren Halteabschnitt (22), wobei der Halteabschnitt (22) zwei parallel zueinander ausgerichtete Klemmelemente (23) aufweist, welche jeweils aus zwei Klemmgliedern (25) gebildet sind, zwischen denen der Rand eines Luftleitbleches (19) einklemmbar ist, und wobei an der dem Halteabschnitt (22) zugewandten Seite des Kopfes (21) ein ringförmiges Dichtelement (24) angeordnet ist, das eine Aussparung im Verbindungsbereich zwischen dem Halteabschnitt (22) und dem Kopf (21) aufweist, wobei in dem Bereich zwischen den Klemmelementen (23) ein zusätzliches Dichtelement (28) angeordnet ist, **dadurch gekennzeichnet, dass** das zusätzliche Dichtelement (28) einstückig mit dem ringförmigen Dichtelement (24) ausgebildet ist.

2. Luftkanal mit mehreren über Flanschprofile miteinander verbundenen Luftkanalabschnitten, wobei der Luftkanal abgewinkelte Luftkanalabschnitte (18) umfasst, in denen ein Luftleitblech (19) angeordnet ist, das über Halteelemente (20) in der gewünschten Position relativ zu dem abgewinkelten Luftkanalabschnitt (18) gehalten wird, **dadurch gekennzeichnet, dass** die Halteelemente (20) gemäß Anspruch 1 ausgebildet sind.

## Claims

1. Holding element (20) for holding an air-guiding plate (19) in an air duct, having a head (21) and having a holding section (22) which is arranged on said head and which can be inserted into the air duct, wherein the holding section (22) has two clamping elements (23) which are oriented parallel to one another and which are formed in each case from two clamping members (25) between which the edge of an air-guiding plate (19) can be clamped, and wherein, on that side of the head (21) which faces toward the holding section (22), there is arranged a ring-shaped sealing element (24) which has a cutout in the connecting region between the holding section (22) and the head (21), wherein an additional sealing element (28) is arranged in the region between the clamping elements (23),
**characterized**
**in that** the additional sealing element (28) is formed in one piece with the ring-shaped sealing element (24).

2. Air duct having multiple air duct sections which are connected to one another by way of flange profiles, wherein the air duct comprises angled air duct sections (18) in which there is arranged an air-guiding plate (19) which is held in the desired position relative to the angled air duct section (18) by way of holding elements (20),
**characterized**
**in that** the holding elements (20) are designed according to Claim 1.

## Revendications

1. Élément de retenue (20) pour retenir un déflecteur d'air (19) dans un conduit d'air, présentant une tête (21) ainsi qu'une portion de retenue (22) disposée sur celle-ci, pouvant être introduite dans le conduit d'air, la portion de retenue (22) présentant deux éléments de serrage (23) orientés parallèlement l'un à l'autre, qui sont chacun formés de deux organes de serrage (25), entre lesquels le bord d'un déflecteur d'air (19) peut être serré, et un élément d'étanchéité de forme annulaire (24) étant disposé au niveau du côté de la tête (21) tourné vers la portion de retenue (22), lequel présente un évidement dans la région de connexion entre la portion de retenue (22) et la tête (21), un élément d'étanchéité supplémentaire (28) étant disposé dans la région entre les éléments de serrage (23),
**caractérisé en ce que**
l'élément d'étanchéité supplémentaire (28) est réalisé d'une seule pièce avec l'élément d'étanchéité de forme annulaire (24).

2. Conduit d'air comprenant plusieurs portions de conduit d'air connectées les unes aux autres par le biais de profilés de bride, le conduit d'air comprenant des portions de conduit d'air coudées (18) dans lesquelles est disposé un déflecteur d'air (19) qui est retenu par le biais d'éléments de retenue (20) dans la position souhaitée par rapport à la portion de conduit d'air coudée (18), **caractérisé en ce que**
les éléments de retenue (20) sont réalisés selon la revendication 1.
